# EUROPEAN PATENT APPLICATION

(11) **EP 1 876 726 A1**
(43) Date of publication of application: **09.01.2008**
(21) Application number: 06300751.2
(22) Date of filing: 04.07.2006
(51) Int. Cl.: H04B 7/01

(54) **System and method to minimise the impact of the Doppler effect in radio transmission to a mobile device**

(71) Applicant: Alcatel Lucent, 75008 Paris (FR)
(72) Inventor: Klotsche, Ralf, 75305 Neuenbürg (DE)
(74) Representative: Brose, Gerhard

(57) **Abstract**

A system for radio transmission between a mobile body moving on a track and base stations via a plurality of antennas is described, while the system comprises a controller switching the antennas regularly assembled along the track between an active and a muted state accordingly to the position of the mobile body. The antenna or group of antennas closest to the mobile body are in a muted state. The system is particularly adapted for mobile body in motion in that the antennas are switched by the controller into a muted state when the mobile body is approaching the respective antennas. The radio transmission link to the mobile body is handoff from one antenna to the other switched in an active state such to keep pace with that mobile body. This can be preferably performed ahead i.e. by preceding the mobile body or behind i.e. by following the mobile body.

## Description

### Technical Field

The present invention relates to a system for radio transmission between a mobile body moving on a track and base stations via a plurality of antennas. The present invention is also related to a controller for a number of antennas connected to base stations for radio transmission to a mobile body moving on a track. Furthermore, it is related to an antenna connected to a base station for such radio transmission. The present invention is also related to a method for radio transmission between a mobile body moving on a track and base stations. The present invention is further adapted to a computer readable medium comprising codes to be executed on a device for radio transmission between a mobile body moving on a track and base stations.

### Background of the invention

It is well known that the frequency spectrum of a radio transmission between a moving vehicle (mobile body) and a base station fixed to the ground undergoes some variation coming from the Doppler effect. Such an effect corresponds to a phase noise that the electromagnetic waves from such radio link are subjected to when the direction of motion of the mobile body is parallel to the direction of the propagating electromagnetic wave. This phase noise or signal fading can be usually neglected for actually used radio transmission techniques based on frequency channels well separated (see GSM or even UMTS).

But this situation may no more be the case for techniques based on multi-carrier transmission trying to use its full capacity. This is typically the case for e.g. Orthogonal Frequency Division Multiplexing (OFDM), the technique used for radio transmission compatible to the IEEE Standard 802.16 also known under the acronym Worldwide Interoperability for Microwave Access WIMAX which seems today one of the most promising technology under discussion for bi-directional communication to mobiles. For such technologies, the sensitivity to the Doppler effect may no more be so negligible since the frequency channels are chosen with a vary narrow frequency spacing.

Doppler shift which is directly proportional to the speed of motion of the mobile body is produced in the range of maximum Doppler frequency. And if the carrier spacing is very small, this variation can be greater than one carrier. Then carrier synchronization on the receiver side starts to be difficult. As a consequence, frequency-selective fading, in which the variation sustained differs depending upon the frequency, occurs implying a degradation of the performance at the receiver. The reason for this is that inter-carrier interference occurs because frequency fluctuation is independent from carrier to carrier (or more specifically, from carrier group to carrier group within the coherence bandwidth). In order to suppress the degradation of performance codes by that interference, it is necessary to make the carrier spacing as large as possible. Thus, there is a tradeoff with regard to transmission efficiency.

For IEEE 802.16 standard which is today one of the favourite technologies under discussion for bidirectional communication to mobiles in motion, the following estimations apply: up to 700 km/h negligible influence; up to 200 km/h slight degradation of signal quality, but can still be tolerated; beyond 200 km/h the effect becomes more and more important and decreases signal quality significantly. At 400 km/h which is the target speed for modern long distance trains, a Doppler compensation is absolutely required. Such a picture may be worse i.e. the speed limit beyond which the Doppler effect becomes more and more important may be less when the used technology is based on a smaller frequency channel spacing to increase transmission capacity. The same limitation appears if the base station more particularly the antenna used for the base station are close to the paths used by the mobile body. This is particularly the case for radio transmission with mobile device like train, moving on track when the antennas are spread near the track. Indeed, when a fast moving mobile device passes by the antenna, the Doppler effect changes the frequencies. And the signal spectrum depending on the speed and angle of direction from the moving mobile device towards the antenna connected to the base station changes abruptly. When the antennas are placed on pylons close to the track used by the mobile device usually a train and since those pylons are located very close to the mobile device, the frequency shift caused by that fast moving mobile device changes partially when the mobile device passes nearby the pylon.

There exists already some wireless communications platform developed specifically for railway communication and applications like the GSM-R (GSM-Railway). As things currently stand, rail companies use in-track cable networks and analog radio for their voice and data communications. In Europe, there are more than 35 different railway radio systems. And in the frame of an EU-funded MORANE (Mobile Radio for Railways Networks in Europe) project was developed GSM-R. The project's goal was to develop a uniform digital radio system for European railroad traffic. GSM-R is a platform for voice and data communications as well as for traffic control system (ETCS, Electronic Train Control System). The GSM-R consists of an extension of GSM with special features developed for rail traffic. As they are closed networks, it is possible to build special applications needed for the railroad environment. GSM-R is used for traffic control, serving amongst others engine drivers as well as personnel working on railroad works both along the rail network and in railway stations. The system ensures a more secure and smooth flow of train traffic. But GSM-R main handicap is coming from its bandwidth limitation intrinsic to GSM and thus rendering impossible any upgrade to fulfil the broadband expectation from nowadays passengers. This is the reason to attempt to adapt new wireless communications platforms for mobile body like train moving on a track particularly for the situation when moving at high speed.

### Summary of the invention

In view of the above, it is an object of the present invention to find a solution for a mobile body moving on a track avoiding the drawback of Doppler effect occurring on radio transmission to that mobile body.

This object is achieved in accordance with the invention by a system for radio transmission between a mobile body moving on a track and base stations via a plurality of antennas, while the system comprises a controller switching the antennas regularly assembled along the track between an active and a muted state accordingly to the position of the mobile body. The antenna or group of antennas closest to the mobile body are in a muted state. The system is particularly adapted for mobile body in motion in that the antennas are switched by the controller into a muted state when the mobile body is approaching the respective antennas. According to an embodiment of the invention, the radio transmission link to the mobile body is handoff from one antenna to the other switched in an active state such to keep pace with that mobile body. This can be preferably performed ahead i.e. by preceding the mobile body or behind i.e. by following the mobile body. It is also possible to optimize the radio transmission in that several antennas ahead or behind the mobile body are switched in an active state such that a group of antennas in an active state keep pace with the mobile body.

The invention is also related to a controller for a number of antennas connected to base stations for radio transmission to a mobile body moving on a track. Such a controller switches the antennas assembled regularly along the track between an active and a muted state accordingly to the position of the mobile body. The invention is also related to an antenna connected to a base station for a radio transmission to a mobile body moving on a track, the antenna being placed in the close vicinity of the track. Such antenna is controlled advantageously by a controller connected to it. The controller switches the antenna between an active and a muted state according to the position of the mobile body with respective to the antenna.

The invention is further related to a method for radio transmission between a mobile body moving on a track and base stations. The method comprises the step to determine the position of the mobile body on a track and to switch between an active and a muted state antennas connected to the base stations and assembled regularly along the track for building that radio transmission. Such switching step is performed accordingly to the determined position of the mobile body on the track by a controller connected to the antennas. The method according to the present invention is such that the antenna closest to the mobile body is switched to a muted state. To keep pace with the moving mobile body, the link of the radio transmission is handoff from one antenna to a next one switched in an active state. The method can be adapted such that the keeping pace procedure is performed ahead or behind the moving mobile body. Such a method can be advantageously implemented as computer executable codes. The codes are then stored in a computer readable medium to be executed on a device for radio transmission between a mobile body moving on a track and base stations. The codes according to the invention comprises some codes when executed control the states of antennas assembled regularly along the track for that radio transmission. The codes comprises further codes that calculate when executed the adequate state between an active and a muted state for the antennas according to the position of the mobile body with respect to the position of the antennas. Such a device according to the invention is preferably but not exclusively a controller connected to the antennas. Such device could be part of the base stations controlling the antennas.

Advantageous developments of the invention are described in the dependent claims, the following description and the drawings.

### Description of the drawings

An exemplary embodiment of the invention will now be explained further with the reference to the attached drawings in which:
Fig. 1 is a picture of a train with the pylons and the antennas in state according to the invention;
Fig. 2 is a graphs of a train on a track with the antennas in different situations according to the invention;
Fig. 3 is a simulation of the frequency shift occurring in three different configurations according to the invention;
Fig. 4 is an enlarged view of the frequency shift in one of the three configurations shown on figure 3.

### Detailed description of preferred embodiments

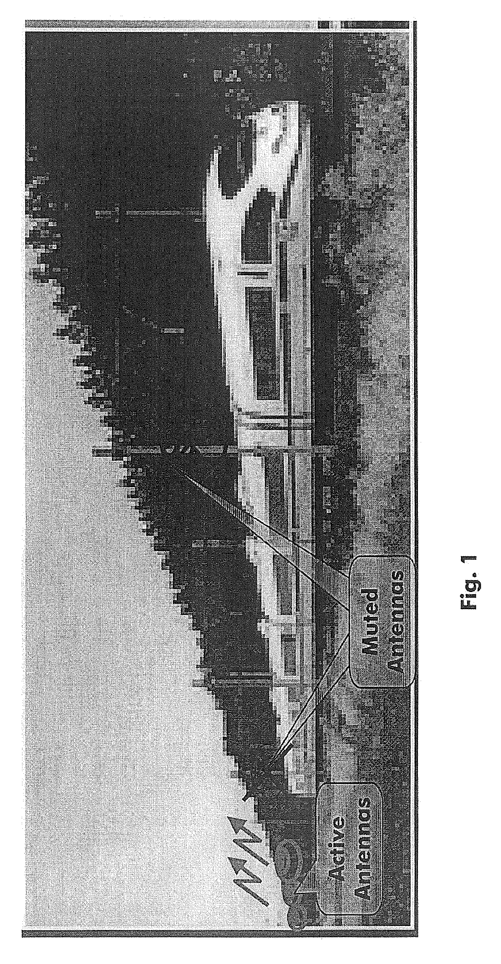

On figure 1 is shown a typical mobile body, here a fast speed train like the German ICE or the French TGV moving on a track while passing one pylon after the others placed in closest vicinity to the track. In an embodiment according to the invention, antennas required for a radio communication with telecommunications terminals inside the train are placed on the pylons. As shown on figure 1, it could be sufficient to place an antenna every two pylons. Other arrangements are conceivable inside the scope of the present invention depending on the possibly used radio telecommunication technology and/or the maximum expected speed of the train as well as the expected telecommunications charge. It is not absolutely necessary that the arrangement of the antennas follows some period i.e. that an antenna is placed every fixed distance. Some irregularity among the arrangement of the antenna could be tolerable and easily compensate as in the specific case when an antenna does no more work correctly. As shown on figure 1, the two antennas which are passed by the train are in a muted state i.e. cannot be involved for a radio communication to a telecommunication's terminal inside the train. Instead, that radio communication are performed with the antennas in an active state behind the train. From that figure 1, it is clear how the system according to the invention has to be implemented. Indeed, the antennas connected to base stations used for the radio transmission to a telecommunication's terminal inside the train are switched between an active and a muted state according to the position of the train with respect to the antenna. The arrangement according to figure 1 corresponds to the case that at least one antenna but possibly a group of antennas behind the train are switched in an active state such that a group of antennas in an active state keep pace with the moving mobile body (here the train on the track).

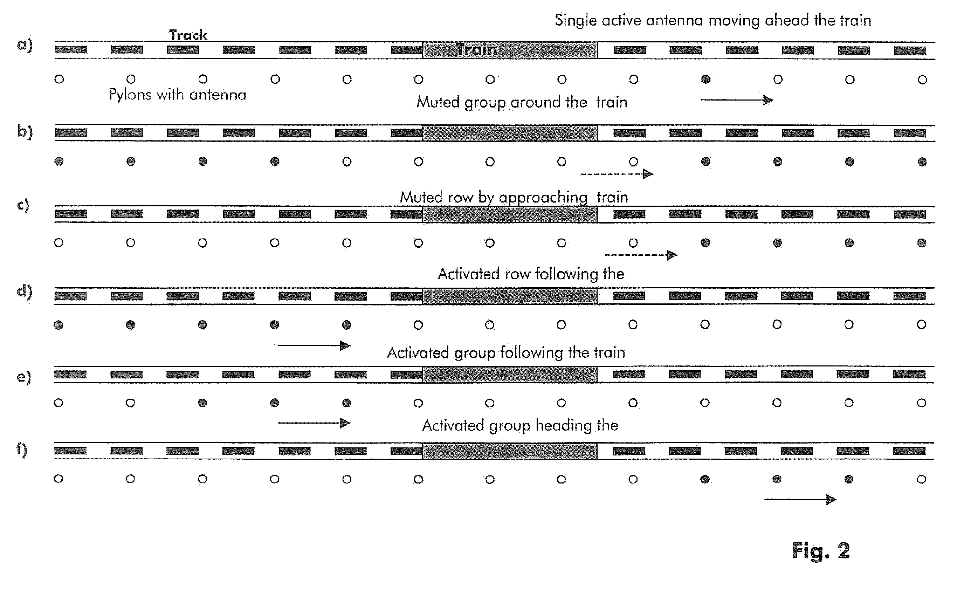

On figure 2 is described different possible configurations a to f according to the invention while in all that configurations are shown a mobile body moving on a specific trajectory here possibly a train on a track while close to the trajectory are marked at regular distance from each other pylons with an antenna. Such pylons are marked with a white dot if the antenna is in a muted state or a black dot if the antenna is in an active state. The configuration shown at figure 2a corresponds to the case that the radio transmission to the train is performed with an antenna switched in an active state ahead the train. For that, an antenna after the other are switched in an active state during a restrictive time after being switched back to a muted state. The arrow indicates which next antenna will be switched from a muted state to an active state. Such arrow corresponds to the direction of motion of the train on a track i.e. from the left to the right.

In the next configuration shown on figure 2b all the antennas are kept in an active state except the antennas closest to the train. In the configuration shown on figure 2c, a number of antennas ahead of the train are in an active state while all the other antennas starting with the one at the head of the train are switched into a muted state. It is clear from such a configuration, that the radio transmission from the train to a base station is performed ahead of the train. In an alternative configuration shown on figure 2d, the radio transmission is performed with antennas in an active state behind the train. In that configuration, all the antennas ahead of the train and close to the train are kept into a muted state while once the train passed an antenna and is away about some predefined distance, then the antenna is switched into an active state.

According to another configuration shown on figure 2e, only a group of antennas, here three antennas, behind the train are switched into an active state for a predefined time interval. Such a time interval is defined according to the train speed and the minimum distance required between the train and the antenna in an active state. That minimum distance are usually predefined and depends on the radio transmission technology and possibly other parameters. In the last configuration shown on figure 2f, all the antennas are kept into a muted state except a group of antennas, here three antennas, ahead of the train. Such a configuration corresponds to the complementary configuration with respect to the configuration shown on figure 2e while the group of active antennas are now ahead of the train and keeping pace with the train moving on a track.

When a fast moving mobile device passes nearby an antenna, the Doppler effect changes the frequency's and signal's spectrum depending on a speed and angle of direction towards the antenna the mobile device moves. In railroad environments, the pylons of the overhead contact line seem to be a perfect location for the antennas of the base station since there are usually under the control of the railroad company and easy to reach. But the pylons are located very close to the track on which the train is moving. In the case the antennas are placed on pylons, the frequency shift caused by a fast moving train will change abruptly when the train passes by the pylon. The Doppler effect cannot be avoided. But the choice of a signal from the right direction as described in the present invention allows to keep the Doppler effect almost constant. One of the characteristics of the invention is to use a regular, possibly but not necessarily, dense pattern of antennas placed on the pylons (not necessarily on every pylon depending on the situation) of the railroads overhead contact line. Several antennas may belong to one base station i.e. directly connected to a single base station since there is no necessity to have one base station per antenna. A requirement of the present invention is that the antennas closest to the train are switched into a muted state therefore not available for a radio transmission to the train. Such switching is performed dynamically in such a way that a train never passes by an active antenna. The dynamic switching is usually performed by a controller connected to a different base station.

In a configuration according to the invention, and if the train is at the location of pylon N, the train receives and sends within the radio transmission to antenna N+1, N+2, or even N+3, while the bigger the offset is, the more constantly is the Doppler effect. This is coming from the acute angle between the moving vehicle and the signal direction. The transmission distance of the signal in such a configuration is not the shortest possible, since the signal to noise ratio may be lowered compared to slow moving mobile devices reaching only the shortest distance. But such an effect can be compensated by the antenna density and/or directed antennas on a train.

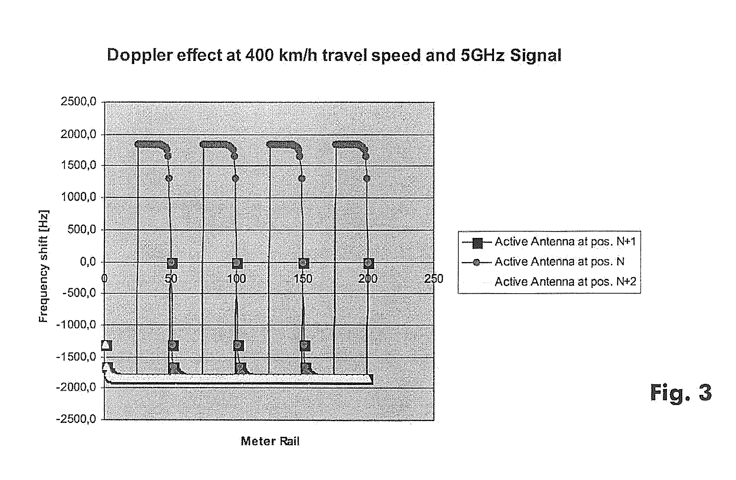

On figure 3 is shown the frequency shifts i.e. the Doppler effect regarding the frequency shifts for three different configurations. The three different configurations correspond to different choice to which antenna the train builds a radio transmission. All the three configurations are defined such that N is the pylon where the train is actually located while the index enumerates the number of pylons the train's antenna has to "look ahead" to receive or send the base station's signal. It is assumed that the pylon's distance is of 50 meters, the distance from the pylon to the train of 1 meter, a radio signal at 5 GHz and the speed of the train at 400 km/h. With such parameters, the first configuration shown with dots on figure 3 corresponds to the case the radio transmission is built with a pylon in the direct vicinity to the train. There can be easily seen a frequency sift of nearly plus/minus 2 kHz directly due to the Doppler effects. More precisely, a 3 kHz frequency shift within 2 meters travelling distance of the train can be measured at the defined speed of motion. Such 2 meters corresponds to a time interval of 18 ms. The ripple kind of structure is easily understandable when remembering that the angle between the mobile body and the direction of the radio transmission is changing of an amount close to 180 degree. It is almost impossible to compensate such a huge Doppler effect within such time interval with the result of a lot of interference within the radio transmission.

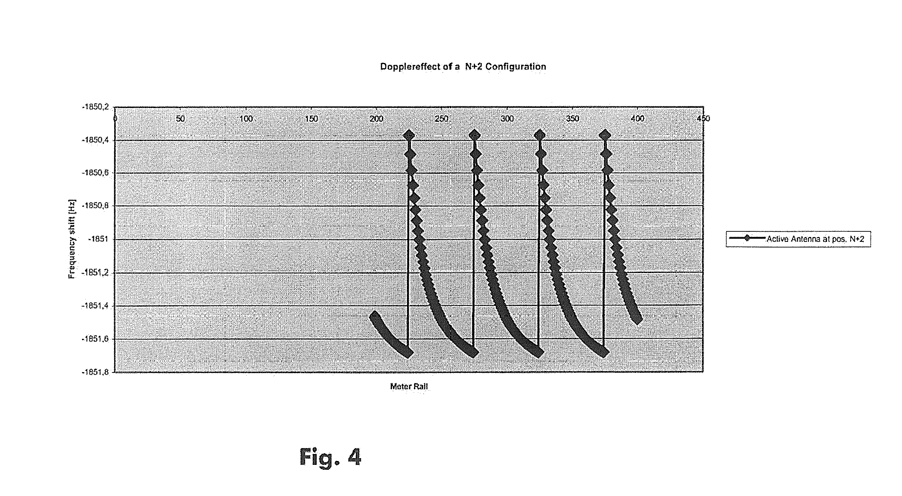

The second configuration shown on figure 3 with squares corresponds to the case N+1 i.e. the antennas are switched off (muted state) as soon as the train reaches that pylon. The Doppler shift is now half big as in the previous configuration i.e. only 2 kHz big. The negative sign is due to the train's direction and would be positive in the case the radio transmission is performed with an antenna in an active state behind the train. In the third configuration depicted with triangle, it can be seen that the Doppler shift is now kept nearly to a constant value of 1.85 kHz. This configuration is defined by a radio transmission between the train and an antenna in an active state two pylons ahead the train. The ripple are now of an amplitude of only 1.4 Hz as shown in the figure 4. The shift of frequency change is less than 0.1 Hz/m. And in the case the radio transmission would be performed with an antenna in an active state even further ahead of the train than the Doppler shift would be even more constant.

In a WIMAX environment it is conceivable to make the choice to build the radio transmission to antennas several hundred meters away from the train since within such radio technology the bandwidth degradation or quality of service are still in a reasonable range. The decision when to switch off (switch from the active state to the muted state) the fixed antennas near the train's position may be made by various measurements:
- measuring the Doppler effect on the received signal at the pylon;
- beacon send out by the train;
- correlating received data with the neighbourer antennas;
- GPS information from the train to locate the train with respect to the antennas. Other possible measurements are conceivable within the scope of the present invention. If there is only one train in the scope of one base station at a time, the whole compensation of the Doppler effect can be done on base station side. This is important especially in a WIMAX environment where frequency shift and a spreading effect of the used spectrum have to be considered.

Any embodiment according to the invention can be implemented using some controller connected to the different antennas and managing the respective state of the antenna for a possible radio transmission towards a mobile body on a track. This can be particularly performed by implementing some codes to be executed on a device being possibly but not exclusively the controller. Such codes when executed analyse different parameters like the position of the train or the signal strength according to which a decision is taken to switch in an active or muted state one antenna after the other when a train is moving on a track. It is possible to implement such a controller as part of the base station while the base stations between each other have to be in mutual connection. Such a requirement is usually anyway fulfilled when conceiving a network adapted for radio transmission.

The implementation of an embodiment according to the present invention has the clear advantage that the required antennas and possibly even all further the equipment like the base stations and the controller can be placed on a region usually own by the operator managing the track as it is the case for the pylons used for the overhead line. The present invention has also the advantage that despite requiring a lot of antennas such antennas need not to be so sophisticated since controlled by a controller managing several antennas. The number of base stations which are usually rather costly can then also be reduced to a minimum.

## Claims

1. A system for radio transmission between a mobile body moving on a track and base stations via a plurality of antennas, the system is **characterized in that** it comprises a controller switching the antennas regularly assembled along the track between an active and a muted state accordingly to the position of the mobile body.

2. The system according to claim 1 wherein the antenna closest to the mobile body is in a muted state.

3. The system according to claim 2 wherein a group of antenna closest to the mobile body are in a muted state.

4. The system according to claim 1 wherein to keep pace with the mobile body the radio transmission link to the mobile body is handoff from one antenna to the other switched in an active state.

5. The system according to claim 4 wherein several antennas are switched in an active state such that a group of antennas in an active state keeps pace with the mobile body.

6. A controller for a number of antennas connected to base stations for radio transmission to a mobile body moving on a track, the controller is **characterized in that** it switches the antennas assembled regularly along the track between an active and a muted state accordingly to the position of the mobile body.

7. An antenna connected to a base station for a radio transmission to a mobile body moving on a track, the antenna is **characterized in that** it is placed in the close vicinity of the track and switched between an active and a muted state by a controller connected to it, the switching being performed accordingly to the position of the mobile body to the antenna.

8. The antenna according to claim 7 wherein it is placed on a pylon present at the track.

9. A method for radio transmission between a mobile body moving on a track and base stations, the method is **characterised by** the step to determine the position of the mobile body on the track while to switch between an active and a muted state antennas connected to the base stations and assembled regularly along the track for building that radio transmission, the switching step being performed by a controller connected to the antennas accordingly to the determined position of the mobile body.

10. The method according to claim 9 whereby the antenna closest to the moving mobile body is switched to the muted states.

11. The method according to claim 9 whereby to keep pace with the moving mobile body, the link of the radio transmission is transferred from one antenna to a next one switched in an active state.

12. A computer readable medium comprising codes to be executed on a device for radio transmission between a mobile body moving on a track and base stations, while the codes are **characterized in that** some codes when executed control the states of antennas assembled regularly along the track for that radio transmission while the choice between an active and a muted state is defined according to the position of the mobile body with respect to the position of the antennas.

13. The computer readable medium according to claim 12 wherein the device is a controller connected to the antennas.

14. The computer readable medium according to claim T2 wherein the device is part of the base stations controlling the antennas.
